(19) Europäisches Patentamt
European Patent Office
Office européen des brevets

(11) EP 4 303 188 A1

(12) EUROPEAN PATENT APPLICATION

(43) Date of publication:
**10.01.2024 Bulletin 2024/02**

(21) Application number: **22183108.4**

(22) Date of filing: **05.07.2022**

(51) International Patent Classification (IPC):
***C01C 1/18*** *(2006.01)* ***B01D 53/18*** *(2006.01)*
***B01J 19/24*** *(2006.01)* ***C01B 21/28*** *(2006.01)*
***C01B 21/40*** *(2006.01)*

(52) Cooperative Patent Classification (CPC):
**C01C 1/185; B01D 53/18; B01J 4/004; B01J 4/005; B01J 10/00; B01J 19/006; B01J 19/0086; C01B 21/28; C01B 21/40;** B01J 2219/00162; B01J 2219/00177

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Katholieke Universiteit Leuven**
**3000 Leuven (BE)**

(72) Inventors:
- **HOLLEVOET, Lander**
  **2340 Beerse (BE)**
- **MARTENS, Johan**
  **3051 Sint-Joris-Weert (BE)**

(74) Representative: **IPLodge bv**
**Technologielaan 9**
**3001 Heverlee (BE)**

(54) **AMMONIUM NITRATE PRODUCTION APPARATUS**

(57) The present invention relates generally to an ammonia capture system or method comprising a NOx source or NOx generator (G) and, more particularly to such system and method for ammonia capture comprising a two-tank NOx absorption system. Furthermore the present invention concerns a system to produce ammonium nitrate in solution or as a solid from atmospheric ammonium.

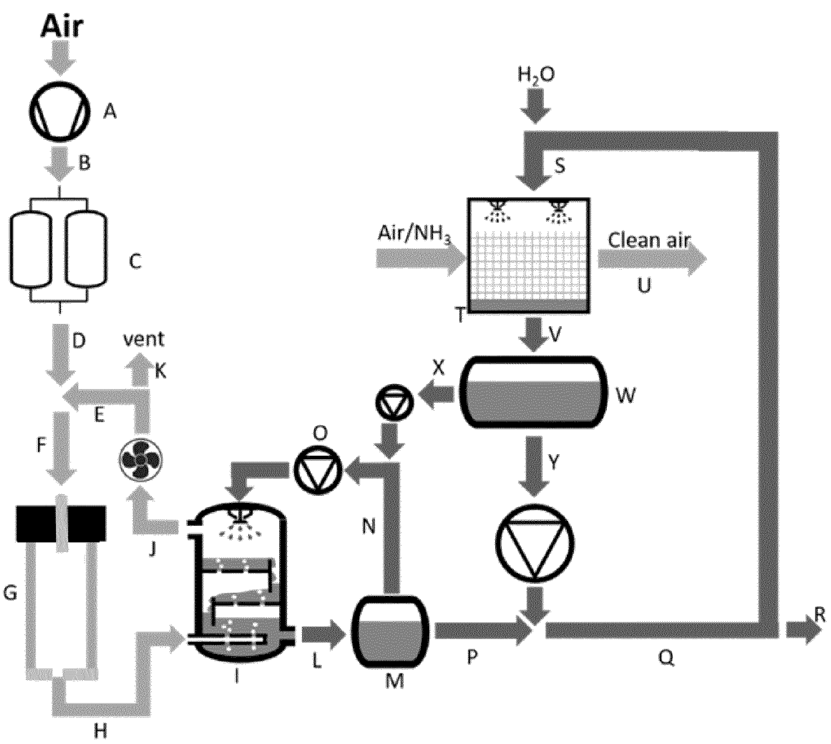


Fig. 1



Processed by Luminess, 75001 PARIS (FR)

## Description

### Background and Summary

### BACKGROUND OF THE INVENTION

A. Field of the Invention

The present invention relates generally to an ammonia capture system or method comprising a NOx source or NOx generator (G) and, more particularly to such system and method for ammonia capture comprising two liquid loops. Furthermore the present invention concerns a system to produce ammonium nitrate in solution or as a solid from atmospheric ammonium.

Several documents are cited throughout the text of this specification. Each of the documents herein (including any manufacturer's specifications, instructions etc.) are hereby incorporated by reference; however, there is no admission that any document cited is indeed prior art of the present invention.

B. Description of the Related Art

There is a serious problem in the art concerning ammonia ($NH_3$) emission. The largest share of the emissions of $NH_3$ originates from livestock farms. Part of the emitted ammonia is precipitated as such, another part is engaged in atmospheric chemistry. In the atmosphere the basic $NH_3$ molecule reacts with acid pollutants, such as $SO_x$ and $NO_x$ from other sources, to produce ultrafine ammonium sulphate and nitrate salt particles, which act as condensation nuclei for atmospheric water. The resulting droplets form an aerosol which is transported over distances before precipitating on the ground. This chemistry explains how ammonia in combination with other air pollutants becomes a powerful fertiliser precipitating on soils from the atmosphere in an uncontrolled manner.

On the other had is nitrogen an essential and quite scarce nutrient in soils, and plants need it for growing. Plants cultivated in agricultural fields and harvested for application as human food, animal feed or biobased products heavily rely on fertilisers providing N, P and K chemical elements, especially. However, the majority of wild plants are adapted to poor soil and, when enriched by the precipitating atmospheric nitrogen compounds, these plants are outcompeted by species such as nettles, blackberries and grasses, which do just fine in nutrient-rich soil. Only about a quarter of all plants on earth benefit from N-fertilisers, while for three quarters it is detrimental. It explains why atmospheric nitrogen fertiliser precipitation entails a potential loss of biodiversity.

Several approaches for reducing the pressure of ammonia emissions on surrounding ecosystems are implemented. 'End-of-pipe' technologies refer to the purification of the air that exits at ventilation openings. Air scrubbers are the prevailing end-of-pipe technique. Air scrubbers for eliminating ammonia can be divided in two categories: biological and acid scrubbers. The operation principle of both types is similar. Air is sent over a packed bed above which a water sprinkler is positioned. The finely divided water absorbs ammonia from the air. In a biological scrubber, the absorbed $NH_3$ is digested by bacteria and converted to nitrite ($NO_2^-$) and subsequently to nitrate ($NO_3^-$) under aerobic conditions. Some experimental biological scrubbers are equipped with an additional denitrification tank, which converts the nitrates to nitrogen gas ($N_2$) under anaerobic conditions. The washing water requires a close to neutral pH in order to sustain the bacteria responsible for the conversion process. In an acid scrubber, the pH of the washing water is controlled typically at a value of 4-6 by addition of sulphuric acid. Absorption of ammonia from the gas phase causes the pH to rise, which needs to be compensated by the addition of acid.

Acid scrubbers of concentrated sulphuric acid, which comes with additional costs and the handling requires training and implies severe safety risks. Furthermore, the liquid product of acid scrubbers is a dilute solution of ammonium sulphate, which a low concentration of N-nutrients and therefore low nutritional value. Biological scrubbers are less efficient at capturing ammonia. They are also less reliable as the biological conversion of captured ammonia can be disrupted by changes in the operation conditions. The concentration of N-nutrients in the liquid product tends to be lower for biological scrubbers than for acid scrubbers.

Thus there is a need in the art for a reliable $NH_3$ scrubbing system which does not require the external supply of hazardous chemicals, efficiently removes $NH_3$ emissions from the gas phase and produces a product with a high concentration of N-nutrients.

The proposed invention solves these problems by in-situ generation of nitric acid ($HNO_3$) by reacting $NO_x$ gasses with an aqueous solution in a gas-liquid contactor (e.g. an absorption column). These acids combine with ammonia to form a solution of ammonium nitrate. Due to the high solubility and high N-content of these salts, the resulting product has a high concentration of N-nutrients. The ammonium nitrate and possibly ammonium nitrite salts can be precipitated to produce a solid product.

## SUMMARY OF THE INVENTION

The present invention solves the problems of the related art by using an inventive system comprising two liquid loops: one loop with a gas-liquid contactor where a gas comprising $NO_x$ is brought into contact with an aqueous solution, producing nitric acid, and one loop with a gas-liquid contactor where a gas comprising $NH_3$ is brought into contact with an aqueous solution comprising nitric acid to produce ammonium nitrate. By using two separate liquid loops, the pH of each liquid loop can be controlled separately.

The liquid loop which produces the nitric acid can be operated under increased overpressure (1-10 bar and preferably 3-7 bar) in the gas-liquid contactor (I) by which it is possible to achieve several advantages. First of all, higher pressure allows a larger amount of gas to be present in the gas-liquid contactor, which increases residence time and conversion for the same volume of gas-liquid contactor. Furthermore, the higher pressure significantly increases the rate of the oxidation of NO to $NO_2$, which has a 3th order dependency on the total pressure. As this is the rate limiting step for $NO_x$ absorption, the $NO_x$ conversion is increased. Finaly, the increased pressure also increases the solubility of $NO_x$ gases into the liquid, accelerating the absorption process.

According to the present invention there is provided the use of a separate high pressure (1-10 bar and preferably 3-7 bar overpressure) liquid loop, comprising an gas-liquid contactor **(I),** the first buffer tank **(M),** pump **(O)** and streams **(N)** and **(L)** to feed the gas-liquid contactor and a separate low pressure (< 1 bar overpressure) loop, comprising an air scrubbing unit **(T),** the second buffer tank **(W)** and streams **(V), (Y), (Q)** and **(S)** has several advantages compared to a single loop and buffer tank. First of all, the pressure increase from the first buffer tank **(M)** to the gas-liquid contactor **(I)** is minimized, which decreases the energy cost. Furthermore, this configuration allows the possibility to maintain a lower pH in the high pressure loop and first buffer tank **(M)** than in the low pressure loop and second buffer tank **(W).** As the selectivity of $NO_x$ conversion to $HNO_3$ increases with lower pH, the disired ratio of $NO_3^-$ vs $NO_2^-$ can be obtained by altering the pH in the high pressure loop. This pH can be lowered by lowering the flowrate of the streams **(X)** and **(P)** or increased by increasing the flowrate of the streams **(X)** and **(P).**

According to the present invention there is provided using oxygen enriched air **(D)** with an $O_2/N_2$ ratio of 2-3 and preferably 2.3-2.7 as feed for the gas loop which contains NOx source or NOx generator (G), gas-liquid contactor **(I)** and streams **(E), (F), (J)** and **(H)** has several advantages compared to using air with a $O_2/N_2$ ratio of 21/78. First of all, it allows the NOx source or NOx generator (G) to operate under an optimized $N_2/O_2$ ratio, which increases the concentration of $NO_x$ that is generated and increases the energy efficiency of the NOx source or NOx generator (G). Furthermore, the increased oxygen concentration in the gas-liquid contactor **(I)** accelerates the oxidation of NO to $NO_2$ (Eq. 2). The reaction rate of this reaction has a first order dependency on the oxygen concentration. Finally, the stoichiometric $O_2/N_2$ ratio for $HNO_3$ production is 2.5. Because the $O_2/N_2$ ratio of stream **(D)** is close to this value, it allows extensive recycling of the gaseous output of the gas-liquid contactor **(I).** Because of this recycling, the emission of unconverted $NO_x$ is strongly reduced, less energy is required for compression of the feed gas and less oxygen enriched air needs to be generated, making the concept more efficient.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description. It is to be understood that both the foregoing general description and the following detailed description are exemplary and explanatory only and are not restrictive of the invention, as claimed.

In a certain aspect of present invention ammonia is removed by sending ammonia enriched air, for instance the stable air, through an air scrubber **(T)** for instance an air scrubber with a porous material bed with water sprinklers above. The material bed ensures a large contact area. The ammonia is absorbed by the water, where it functions as a weak base (pKa = 9.25).

This results in the conversion of volatile $NH_3$ into highly soluble $NH_4^+$, as shown in eq. 1. The water is slightly acidic (pH 4-6.9) to shift the equilibrium to the $NH_4^+$ side.

$$NH_3\,(g) + H^+\,(aq) \rightleftharpoons NH_4^+\,(aq) \qquad \text{(Eq. 1)}$$

This air scrubber (T) has a gas input for receiving ammonia containing gas for instance air from an animal stable. The air scrubber has an output for liquid connected with an input into a buffer tank (W) to collect such ammonia enriched water from the air scrubber and to buffer it to a pH of 1 to 6. This is because the consumption of protons by ammonium formation increases the pH of the water, which then shifts the equilibrium back to the $NH_3$ side of Eq.1 and diminishes the driving force for the absorption of airborne $NH_3$. The increase in pH caused by the conversion of $NH_3$ to $NH_4^+$ therefore needs to be compensated by the addition of an acid. A liquid guidance from the buffer tank provided with a

pump connects with an input of the air scrubber to recycle liquid into the air scrubber (T) transversal on the ammonia comprising gas stream. In present invention this apparatus is described as the second recirculation unit.

In certain embodiments of the present invention, nitric acid ($HNO_3$) and nitrous acid ($HNO_2$) are generated inside the process in a series of steps. First, air is fed to a compressor **(A)** to achieve an overpressure of 1-11 bar and preferably 3-7 bar. Next, the compressed air **(B)** is sent to an air separation unit **(C)** (e.g. membrane separation or pressure swing adsorption) which generates oxygen enriched air **(D)** with an $O_2/N_2$ ratio of 2-3 and preferably 2.3-2.7 and an overpressure of 1-10 bar and preferably 3-8 bar.

The production systems or apparatus of present invention is connected with or comprises a NOx source or generator (G).

The NOx source or NOx generator (G) fluidly connects with gas-liquid contactor **(I)** of the first recirculation unit so that $NO_x$ containing gas **(H)** is sent to a gas-liquid contactor **(I).** In the gas-liquid contactor **(I)** the gas is brought into contact with an acidic aqueous solution (pH 1-6), which can comprise $NH_3$, $NH_4^+$, $NO_3^-$ and $NO_2^-$. A gas output of the gas-liquid contactor (I) can be fluidly connected with the NOx source or NOx generator (G).

The gas-liquid contactor **(I)** of the first recirculation unit is fluidly connected with an input of a buffer tank **(M).** This buffer tank **(M)** is preferably under an overpressure of 1-10 bar and more preferably 3-7 bar. This way liquid stream **(L)** coming from the gas-liquid contactor **(I)** is sent to this buffer tank **(M)** preferably with an overpressure of 1-10 bar and more preferably 3-7 bar. This buffer tank **(M)** is with an output fluidly connected with aborption column **(I),** so that a share **(N)** of the aqueous solution in this buffer tank **(M)** can be fed back to the gas-liquid contactor by a liquid pump (**O**). The buffer tank **(M)** is with another output fluidly connected with a liquid stream guidance from the output of a buffer tank **(W)** from the second recirculation unit. So that another share **(P)** of the aqueous solution is mixed with another liquid stream **(Q)** which operates at near atmospheric pressure (overpressure < 1 bar). A small share (< 10 %) **(R)** of this liquid stream is drained via an output of this second recirculation system.

Some embodiments of the invention are set forth in claim format directly below:

1. A system for production of an ammonium nitrate and/or ammonium nitrite solution or solid from an ammonium comprising gas, comprising

   i) a NOx source or NOx generator (G)
   ii) an aqueous fluid recirculation unit comprising a gas-liquid contactor and a liquid pump operating under atmospheric pressure or near atmospheric pressure (overpressure < 1 bar) and a slightly acidic pH of 4 to 6.9 to capture ammonia from an ammonia comprising gas into an aqueous stream comprising nitric acid and/or nitrous acid to produce ammonium nitrate and/or ammonium nitrite.
   iii) an aqueous fluid recirculation unit comprising a gas-liquid contactor and a liquid pump to produce nitric acid and/or nitrous acid whereby the aqueous fluid under a pH of 1 to 6 with intake in the unit of NOx from the NOx generator (G) and intake in the unit of aqueous fluid from the other aqueous fluid recirculation unit.

2. A system according to embodiment 1, for continuous production of an ammonium nitrate and/or ammonium nitrite solution or solid from an ammonium comprising gas, comprising

   i) a NOx source or NOx generator (G)
   ii) an aqueous fluid recirculation unit comprising a gas-liquid contactor and a liquid pump operating under atmospheric pressure or near atmospheric pressure (overpressure < 1 bar) and a slightly acidic pH of 4 to 6.9 to capture ammonia from an ammonia comprising gas into an aqueous stream comprising nitric acid and/or nitrous acid to produce ammonium nitrate and/or ammonium nitrite.
   iii) an aqueous fluid recirculation unit comprising a gas-liquid contactor and a liquid pump to produce nitric acid and/or nitrous acid whereby the aqueous fluid under a pH of 1 to 6 with intake in the unit of NOx from the NOx generator (G) and intake in the unit of aqueous fluid comprising ammonium nitrate and/or ammonium nitrite and/or nitric acid and/or nitrous acid from the other aqueous fluid recirculation unit.

3. The system according to embodiment 1, whereby the nitric acid and/or nitrous acid production unit (iii) is under increased pressure of 1-10 bar.
4. The system according to embodiment 1, whereby the nitric acid and/or nitrous acid production unit (iii) is under increased pressure of 3-7 bar.
5. The system according to any one of the embodiments 1 to 3, whereby the aqueous fluid comprising a dissolved ammonium nitrate and/or ammonium nitrite salt and a nitric acid or nitrous acid or combination thereof.
6. The system according to any one of the embodiments 1 to 4, whereby the ammonium nitrate and/or ammonium nitrite end product is in an aqueous solution.
7. The system according to any one of the embodiments 1 to 4, whereby the ammonium nitrate and/or ammonium

nitrite end product is a solid.
8. The system according to any one of the embodiments 1 to 6, whereby NOx source is from a NOx generator (G) with an oxygen enriched air stream and under pressure of 1-10 bar that passed through the NOx source or NOx generator (G).
9. The system according to any one of the embodiments 1 to 6, whereby NOx source is from a NOx generator (G) with an oxygen enriched air stream with an $O_2/N_2$ ratio of 2-3 and under pressure of 1-10 bar that passed through the NOx source or NOx generator (G).
10. The system according to any one of the embodiments 1 to 6, whereby NOx source is from a NOx generator (G) with an oxygen enriched air stream with an $O_2/N_2$ ratio of 2.3-2.7 and under pressure of 1-10 bar that passed through the NOx source or NOx generator (G).
11. The system according to any one of the embodiments 1 to 6, whereby NOx source is from a NOx generator (G) with an oxygen enriched air stream with an $O_2/N_2$ ratio of 2.3-2.7 and under pressure of 3-8 bar that passed through the NOx source or NOx generator (G).
12. The system according to any one of the embodiments 1 to 10, whereby the oxygen enriched air stream from the NOx generator (G) takes up a gas stream from the aqueous fluid recirculation unit nitric acid and/or nitrous acid production unit (iii).

Some other embodiments of the invention are set forth in claim format directly below:

1. A system for production of an ammonium nitrate and/or ammonium nitrite solution or solid from an ammonium comprising gas, comprising

i) a NOx source or NOx generator (G)
ii) an aqueous fluid recirculation unit comprising a gas-liquid contactor and a liquid pump operating under atmospheric pressure or near atmospheric pressure (overpressure < 1 bar) and a slightly acidic pH of 4 to 6.9 to capture ammonia from an ammonia comprising gas into an aqueous stream comprising nitric acid and/or nitrous acid to produce ammonium nitrate and/or ammonium nitrite.
iii) an aqueous fluid recirculation unit comprising a gas-liquid contactor and a liquid pump to produce nitric acid and/or nitrous acid whereby the aqueous fluid under a pH of 1 to 6 with intake in the unit of NOx from the NOx generator (G) and intake in the unit of aqueous fluid from the other aqueous fluid recirculation unit.

2. A system according to claim 1, for continuous production of an ammonium nitrate and/or ammonium nitrite solution or solid from an ammonium comprising gas, comprising

i) a NOx source or NOx generator (G)
ii) an aqueous fluid recirculation unit comprising a gas-liquid contactor and a liquid pump operating under atmospheric pressure or near atmospheric pressure (overpressure < 1 bar) and a slightly acidic pH of 4 to 6.9 to capture ammonia from an ammonia comprising gas into an aqueous stream comprising nitric acid and/or nitrous acid to produce ammonium nitrate and/or ammonium nitrite.
iii) an aqueous fluid recirculation unit comprising a gas-liquid contactor and a liquid pump to produce nitric acid and/or nitrous acid whereby the aqueous fluid under a pH of 1 to 6 with intake in the unit of NOx from the NOx generator (G) and intake in the unit of aqueous fluid comprising ammonium nitrate and/or ammonium nitrite and/or nitric acid and/or nitrous acid from the other aqueous fluid recirculation unit.

3. The system according to claim 1, whereby the nitric acid and/or nitrous acid production unit (iii) is under increased pressure of 1-10 bar.
4. The system according to claim 1, whereby the nitric acid and/or nitrous acid production unit (iii) is under increased pressure of 3-7 bar.
5. The system according to any one of the claims 1 to 3, whereby the aqueous fluid comprising a dissolved ammonium nitrate and/or ammonium nitrite salt and a nitric acid or nitrous acid or combination thereof.
6. The system according to any one of the claims 1 to 4, whereby the ammonium nitrate and/or ammonium nitrite end product is in an aqueous solution.
7. The system according to any one of the claims 1 to 4, whereby the ammonium nitrate and/or ammonium nitrite end product is a solid.
8. The system according to any one of the claims 1 to 6, whereby NOx source is from a NOx generator (G) comprising a NOx source or generator (G) and operating under an overpressure of 1-10 bar.
9. The system according to any one of the claims 1 to 6, whereby NOx source is from a NOx generator (G) comprising a NOx source or generator (G) fed with a mixture of one or more $N_2$ and/or $O_2$ comprising gas streams with a

combined $O_2/N_2$ ratio of 2-3, and $N_2$ and $O_2$ comprising recirculated gas coming from the gas outlet of the fluid recirculation unit (iii) with an $O_2/N_2$ ratio of 0.4-2.5.

10. The system according to claim 9, whereby mixture to be fed to the NOx source or generator (G) also has an $O_2/N_2$ ratio of 0.4-2.5.

11. The system according to any one of the claims 1 to 6, whereby NOx source is from a NOx generator (G) comprising a NOx source or generator (G) fed with a mixture of one or more $N_2$ and/or $O_2$ comprising gas streams with a combined $O_2/N_2$ ratio of 2.3-2.7, and $N_2$ and $O_2$ comprising recirculated gas coming from the gas outlet of the fluid recirculation unit (iii) with an $O_2/N_2$ ratio of 0.4-2.5.

12. The system according to claim 11, whereby mixture to be fed to NOx source or generator (G) also has an $O_2/N_2$ ratio of 0.4-2.5..

13. The system according to any one of the claims 1 to 6, whereby NOx source is from a NOx generator (G) comprising a NOx source or generator (G) to be fed with a mixture of one or more $N_2$ and/or $O_2$ comprising gas streams with a combined $O_2/N_2$ ratio of 2.3-2.7, and $N_2$ and $O_2$ comprising recirculated gas coming from the gas outlet of the fluid recirculation unit (iii) with an $O_2/N_2$ ratio of 0.4-2.5.

14. The system according to claim 13, whereby the mixture to be fed to the NOx source or generator (G) also has an $O_2/N_2$ ratio of 0.4-2.5 and under pressure of 1-10 bar that passed through a NOx source or generator (G).

15. The system according to any one of the claims 1 to 6, whereby NOx source is from a NOx generator (G) comprising a NOx source or generator (G) to be fed with a mixture of one or more $N_2$ and/or $O_2$ comprising gas streams with a combined $O_2/N_2$ ratio of 2.3-2.7, and $N_2$ and $O_2$ comprising recirculated gas coming from the gas outlet of the fluid recirculation unit (iii) with an $O_2/N_2$ ratio of 0.4-2.5.

16. The system according to claim 15, whereby the mixture to be fed to the NOx source or generator (G) also has an $O_2/N_2$ ratio of 0.4-2.5 and under pressure of 3-8 bar that passed through the NOx source or generator (G).

## Detailed Description

## DETAILED DESCRIPTION OF EMBODIMENTS OF THE INVENTION

The following detailed description of the invention refers to the accompanying drawings. The same reference numbers in different drawings identify the same or similar elements. Also, the following detailed description does not limit the invention. Instead, the scope of the invention is defined by the appended claims and equivalents thereof.

Several documents are cited throughout the text of this specification. Each of the documents herein (including any manufacturer's specifications, instructions etc.) are hereby incorporated by reference; however, there is no admission that any document cited is indeed prior art of the present invention.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it doe not exclude other elements or steps. It is thus to be interpreted as specifying the presence of the stated features, integers, steps or components as referred to, but doe not preclude the presence or addition of one or more other features, integers, steps or components, or groups thereof. Thus, the scope of the expression "a device comprising means A and B" should not be limited to the devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Other embodiments of the invention will be apparent to those skilled in the art from consideration of the specification and practice of the invention disclosed herein.

It is intended that the specification and examples be considered as exemplary only.

Each and every claim is incorporated into the specification as an embodiment of the present invention. Thus, the claims are part of the description and are a further description and are in addition to the preferred embodiments of the present invention.

Each of the claims set out a particular embodiment of the invention.

The following terms are provided solely to aid in the understanding of the invention.

## Definitions

The terms "about" or "approximately" are defined as being close to as understood by one of ordinary skill in the art. In one non-limiting embodiment the terms are defined to be within 10%, preferably, within 5%, more preferably, within 1%, and most preferably, within 0.5%.

The terms "wt. %," "vol. %" or "mol. %" refer to a weight, volume, or molar percentage of a component, respectively, based on the total weight, the total volume, or the total moles of material that includes the component. In a non-limiting example, 10 moles of component in 100 moles of the material is 10 mol. % of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, include any measurable decrease or complete inhibition to achieve a desired result.

The term "effective," as that term is used in the specification and/or claims, means adequate to accomplish a desired, expected, or intended result.

The use of the words "a" or "an" when used in conjunction with the term "comprising," "including," "containing," or "having" in the claims or the specification may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The process of the present invention can "comprise," "consist essentially of," or "consist of' particular ingredients, components, compositions, etc., disclosed throughout the specification.

The term "primarily," as that term is used in the specification and/or claims, means greater than any of 50 wt. %, 50 mol. %, and 50 vol. %. For example, "primarily" may include 50.1 wt. % to 100 wt. % and all values and ranges there between, 50.1 mol. % to 100 mol. % and all values and ranges there between, or 50.1 vol. % to 100 vol. % and all values and ranges there between.

Any convenient type of air separation can be used, such as cryogenic separation, membrane separation, absorption separation, and/or adsorption (including swing adsorption).

The words "a pressure of' or "an overpressure of" relate to the pressure level relative to the atmospheric pressure.

Nitrogen Oxides gases form when organic molecules are destroyed by energizing for instance by in combustion processes such as under high temperatures or under oscillating electromagnetic field (oscillating electromagnetic field combustion) . For instance waste incineration may be a NOx source. For present invention the source of NOx is preferably

a gaseous source and it can be a gas comprising molecules selected from the group consisting of NO, N2O, NO2 and mixtures thereof. The NOx source or generator may be for generator by thermal NOx or fuel NOx process.

The air in stables needs to be refreshed constantly to meet with regulations and keep the concentration of pollutants such as ammonia below a critical value. If the air coming from the stables would be vented to the environment without further treatment, the ammonia emissions would disturb nearby eco-systems. Therefore, regulations require ammonia to be removed from the air.

By present invention ammonia is removed by sending ammonia enriched air, for instance the stable air, through a porous material bed with water sprinklers above. The material bed ensures a large contact area. The ammonia is absorbed by the water, where it functions as a weak base (pKa = 9.25). This results in the conversion of volatile $NH_3$ into highly soluble $NH_4^+$, as shown in eq. 1. The water is slightly acidic (pH 4-6.9) to shift the equilibrium to the $NH_4^+$ side.

$$NH_3\,(g) + H^+\,(aq) \rightleftharpoons NH_4^+\,(aq) \qquad \text{(Eq. 1)}$$

The consumption of protons by ammonium formation increases the pH of the water, which then shifts the equilibrium back to the $NH_3$ site and diminishes the driving force for the absorption of airborne $NH_3$. The increase in pH caused by the conversion of $NH_3$ to $NH_4^+$ therefore needs to be compensated by the addition of an acid.

With present invention, nitric acid ($HNO_3$) and nitrous acid ($HNO_2$) are generated inside the process in a series of steps. First, air is fed to a compressor **(A)** to achieve an overpressure of 1-11 bar and preferably 3-7 bar. Next, the compressed air **(B)** is sent to an air separation unit **(C)** (e.g. membrane separation or pressure swing adsorption) which generates oxygen enriched air **(D)** with an $O_2/N_2$ ratio of 2-3 and preferably 2.3-2.7 and an overpressure of 1-10 bar and preferably 3-8 bar.

Next, NOx is provided a NOx source or NOx generator (G)

Next, the $NO_x$ containing gas **(H)** is sent to an gas-liquid contactor **(I)** where the gas is brought into contact with an acidic aqueous solution (pH 1-6), which can comprise $NH_3$, $NH_4^+$, $NO_3^-$ and $NO_2^-$. The reactions shown in equation 4 - 12 take place inside the adsorption column.

$$2\,NO + O_2 \rightarrow 2\,NO_2 \qquad \text{(Eq. 4)}$$

$$2\,NO_2 \rightleftharpoons N_2O_4 \qquad \text{(Eq. 5)}$$

$$NO + NO_2 \rightleftharpoons N_2O_3 \qquad \text{(Eq. 6)}$$

$$3\,NO_2 + H_2O \rightleftharpoons 2\,HNO_3 + NO \qquad \text{(Eq. 7)}$$

$$2\,NO_2 + H_2O \rightleftharpoons HNO_2 + HNO_3 \qquad \text{(Eq. 8)}$$

$$NO + NO_2 + H_2O \rightleftharpoons 2\,HNO_2 \qquad \text{(Eq. 9)}$$

$$N_2O_3 + H_2O \rightleftharpoons 2\,HNO_2 \qquad \text{(Eq. 10)}$$

$$N2O4 + H2O \rightleftharpoons HNO_2 + HNO_3 \qquad \text{(Eq. 11)}$$

$$3\,HNO_2 \rightleftharpoons H_2O + 2\,NO + HNO_3 \qquad \text{(Eq. 12)}$$

Combined, Eq. 4-12 result in the conversion of $NO_x$ into $HNO_2$ and $HNO_3$. The ratio of $HNO_3/HNO_2$ is determined by the pH of the aqueous solution, with a lower pH resulting in a higher selectivity towards $HNO_3$. The rate limiting reaction is given by Eq. 4.

The adsorption column removes > 75 %, and preferably > 90 % of $NO_x$ out of the gas phase. The remaining

gas **(J),** comprising $N_2$, $O_2$ and possibly some $NO_x$, is recirculated by a fan or compressor **(K).** The majority (> 75 %) **(E)** of the recirculated gasses is mixed with oxygen enriched air **(D)** and the mixed stream **(F)** can be fed back to the NOx source or NOx generator (G). A small share (< 25 %) **(K)** of the recirculated gas is purged to avoid the accumulation of inert or unwanted species such as argon.

The liquid stream **(L)** coming from the gas-liquid contactor **(I)** is sent to a first buffer tank **(M)** with an overpressure of 1-10 bar and preferably 3-7 bar. A share **(N)** of the aqueous solution in the first buffer tank **(M)** is fed back to the gas-liquid contactor by a liquid pump (**O**). Another share **(P)** of the aqueous solution is mixed with another liquid stream **(Q)** which operates at near atmospheric pressure (overpressure < 1 bar). A small share (> 10 %) **(R)** of this liquid stream is drained. The remaining share **(S)** can be mixed with a stream of water (> 95 wt% $H_2O$) before it is sent to an air scrubbing unit **(T).** Inside the air scrubbing unit **(T),** the aqueous solution (pH 4-6.9) is brought into contact with air containing gaseous $NH_3$ (1-50 ppm). The ammonia is absorbed into the aqueous solution. This removes > 70 % and preferably > 90 % of $NH_3$ out of the gas phase. The purified gas stream is vented to the atmosphere. The liquid coming from the gas scrubber **(V)** is an aqueous solution comprising $NH_4^+$, $NH_3$, $NO_3^-$ and $NO_2^-$ with a pH of 4-6.9. This liquid is sent to a second buffer tank **(W),** which operates at near atmospheric pressure (< 1 bar overpressure). Some of the liquid **(X)** from the second buffer tank is pumped to and mixed with the stream **(N)** coming from the first buffer tank. The mixed stream has an overpressure pressure of 1-10 bar and preferably 3-7 bar. Another share of the liquid **(Y)** coming from the second buffer tank **(W)** is mixed with another stream **(P)** coming from the second tank. The mixed stream **(Q)** operates at near atmospheric pressure (overpressure < 1 bar).

Optionally, ammonium nitrate and/or ammonium nitrite can be precipitated out of the liquid product **(R)** by cooling of the aqueous solution, which lowers the solubility of the dissolved ammonium nitrate and ammonium nitrite. The remaining aqueous solution, which has decreased concentration of dissolved ammonium nitrite and ammonium nitrate (< 5 wt%) can be fed back to the air scrubber through stream **(Z).**

## Technical Features

The proposed concept is an inventive step compared to what is available in the state of the art because of four innovations:

- The use of increased overpressure pressure (1-10 bar and preferably 3-7 bar) in the gas-liquid contactor **(I)** has several advantages. First of all, higher pressure allows a larger amount of gas to be present in the gas-liquid contactor, which increases residence time and conversion for the same volume of gas-liquid contactor. Furthermore, the higher pressure significantly increases the rate of the oxidation of NO to $NO_2$, which has a 3th order dependency on the total pressure. As this is the rate limiting step for $NO_x$ absorption, the $NO_x$ conversion is increased. Finaly, the increased pressure also increases the solubility of $NO_x$ gases into the liquid, accelerating the absorption process.
- The use of a separate high pressure (1-10 bar and preferably 3-7 bar overpressure) liquid loop, comprising an gas-liquid contactor **(I),** the first buffer tank **(M),** pump (**O**) and streams **(N)** and **(L)** to feed the gas-liquid contactor and a separate low pressure (< 1 bar overpressure) loop, comprising an air scrubbing unit **(T),** the second buffer tank **(W)** and streams **(V), (Y), (Q)** and **(S)** has several advantages compared to a single loop and buffer tank. First of all, the pressure increase from the first buffer tank **(M)** to the gas-liquid contactor **(I)** is minimized, which decreases the energy cost. Furthermore, this configuration allows the possibility to maintain a lower pH in the high pressure loop and first buffer tank **(M)** than in the low pressure loop and second buffer tank **(W).** As the selectivity of $NO_x$ conversion to $HNO_3$ increases with lower pH, the disired ratio of $NO_3^-$ vs $NO_2^-$ can be obtained by altering the pH in the high pressure loop. This pH can be lowered by lowering the flowrate of the streams **(X)** and **(P)** or increased by increasing the flowrate of the streams **(X)** and **(P).**
- Using oxygen enriched air **(D)** with an $O_2/N_2$ ratio of 2-3 and preferably 2.3-2.7 as feed for the gas loop which contains a NOx source or NOx generator (G), gas-liquid contactor (**I**) and streams **(E), (F), (J)** and **(H)** has several advantages compared to using air with a $O_2/N_2$ ratio of 21/78. First of all, it allows a NOx source or NOx generator (G) to operate under an optimized $N_2/O_2$ ratio, which increases the concentration of $NO_x$ that is generated and increases the energy efficiency of the a NOx source or NOx generator (G). Furthermore, the increased oxygen concentration in the gas-liquid contactor **(I)** accelerates the oxidation of NO to $NO_2$ (Eq. 2). The reaction rate of this reaction has a first order dependency on the oxygen concentration. Finally, the stoichiometric $O_2/N_2$ ratio for $HNO_3$ production is 2.5. Because the $O_2/N_2$ ratio of stream **(D)** is close to this value, it allows extensive recycling of the gaseous output of the gas-liquid contactor **(I).** Because of this recycling, the emission of unconverted $NO_x$ is strongly reduced, less energy is required for compression of the feed gas and less oxygen enriched air needs to be generated, making the concept more efficient.

Particular and preferred aspects of the invention are set out in the accompanying independent and dependent claims. Features from the dependent claims may be combined with features of the independent claims and with features

of other dependent claims as appropriate and not merely as explicitly set out in the claims.

Thus, the claims following the detailed description are hereby expressly incorporated into this detailed description, with each claim standing on its own as a separate embodiment of this invention.

## Drawing Description

### BRIEF DESCRIPTION OF THE DRAWINGS

The present invention will become more fully understood from the detailed description given herein below and the accompanying drawings which are given by way of illustration only, and thus are not limitative of the present invention, and wherein:

FIG. 1 provides a schematic overview of the system of present invention. Hereby nitric acid ($HNO_3$) and nitrous acid ($HNO_2$) are generated in a series of steps. First, air is fed to a compressor **(A)** to achieve an overpressure of 1-11 bar and preferably 3-7 bar. Next, the compressed air **(B)** is sent to an air separation unit **(C)** (e.g. membrane separation or pressure swing adsorption) which generates oxygen enriched air **(D)** with an $O_2/N_2$ ratio of 2-3 and preferably 2.3-2.7 and an overpressure of 1-10 bar and preferably 3-8 bar. Next, the pressurized oxygen enriched air is mixed with the recirculated gas coming from the gas-liquid contactor **(E),** which comprises $N_2$, $O_2$ and possibly $NO_x$. The resulting gas mixture **(F)** has an $O_2/N_2$ ratio of 0.4-2.5 and is fed to a NOx source or NOx generator (G), where it is partly converted to $NO_x$ ($NO_2$ and NO), according to eq. 2 and 3, with a $NO_x$ concentration of 1-10 %. This can be according the following equations: $N_2$ (g) + 2 $O_2$ (g) $\rightarrow$ 2 $NO_2$ (g) (Eq. 2) & $N_2$ (g) + $O_2$ (g) $\rightarrow$ NO (g) (Eq. 3). Next, the $NO_x$ containing gas **(H)** is sent to an gas-liquid contactor **(I)** where the gas is brought into contact with an acidic aqueous solution (pH 1-6), which can comprise $NH_3$, $NH_4^+$, $NO_3^-$ and $NO_2^-$. Furthermore reactions shown in equation 4 - 12 take place inside the adsorption column as follows 2 NO + $O_2$ $\rightarrow$ 2 $NO_2$ (Eq. 4) & 2 $NO_2$ $\rightleftharpoons$ $N_2O_4$ (Eq. 5) & NO + $NO_2$ $\rightleftharpoons$ $N_2O_3$ (Eq. 6) & 3 $NO_2$ + $H_2O$ $\rightleftharpoons$ 2 $HNO_3$ + NO (Eq. 7) & 2 $NO_2$ + $H_2O$ $\rightleftharpoons$ $HNO_2$ + $HNO_3$ (Eq. 8) & NO + $NO_2$ + $H_2O$ $\rightleftharpoons$ 2 $HNO_2$ (Eq. 9) & $N_2O_3$ + $H_2O$ $\rightleftharpoons$ 2 $HNO_2$ (Eq. 10) & N2O4 + H2O $\rightleftharpoons$ $HNO_2$ + $HNO_3$ & (Eq. 11) & 3 $HNO_2$ $\rightleftharpoons$ $H_2O$ + 2 NO + $HNO_3$ (Eq. 12). This combined, Eq. 4-12 result in the conversion of $NO_x$ into $HNO_2$ and $HNO_3$. The ratio of $HNO_3/HNO_2$ is determined by the pH of the aqueous solution, with a lower pH resulting in a higher selectivity towards $HNO_3$. The rate limiting reaction is given by Eq. 4. The adsorption column removes > 75 %, and preferably > 90 % of $NO_x$ out of the gas phase. The remaining gas **(J),** comprising $N_2$, $O_2$ and possibly some $NO_x$, is recirculated by a fan or compressor **(K).** The majority (> 75 %) **(E)** of the recirculated gasses is mixed with oxygen enriched air **(D)** and the mixed stream **(F)** is fed back to the a NOx source or NOx generator (G). A small share (< 25 %) **(K)** of the recirculated gas is purged to avoid the accumulation of inert or unwanted species such as argon. The liquid stream **(L)** coming from the gas-liquid contactor **(I)** is sent to a first buffer tank **(M)** with an overpressure of 1-10 bar and preferably 3-7 bar. A share **(N)** of the aqueous solution in the first buffer tank **(M)** is fed back to the gas-liquid contactor by a liquid pump (**O**). Another share **(P)** of the aqueous solution is mixed with another liquid stream **(Q)** which operates at near atmospheric pressure (overpressure < 1 bar). A small share (> 10 %) **(R)** of this liquid stream is drained. The remaining share **(S)** can be mixed with a stream of water (> 95 wt% $H_2O$) before it is sent to an air scrubbing unit **(T).** Inside the air scrubbing unit **(T),** the aqueous solution (pH 4-6.9) is brought into contact with air containing gaseous $NH_3$ (1-50 ppm). The ammonia is absorbed into the aqueous solution. This removes > 70 % and preferably > 90 % of $NH_3$ out of the gas phase. The purified gas stream is vented to the atmosphere. The liquid coming from the gas scrubber **(V)** is an aqueous solution comprising $NH_4^+$, $NH_3$, $NO_3^-$ and $NO_2^-$ with a pH of 4-6.9. This liquid is sent to a second buffer tank **(W),** which operates at near atmospheric pressure (< 1 bar overpressure). Some of the liquid **(X)** from the second buffer tank is pumped to and mixed with the stream **(N)** coming from the first buffer tank. The mixed stream has an overpressure pressure of 1-10 bar and preferably 3-7 bar. Another share of the liquid **(Y)** coming from the second buffer tank **(W)** is mixed with another stream **(P)** coming from the second tank. The mixed stream **(Q)** operates at near atmospheric pressure (overpressure < 1 bar).

Optionally, ammonium nitrate and/or ammonium nitrite can be precipitated out of the liquid product **(R)** by cooling of the aqueous solution, which lowers the solubility of the dissolved ammonium nitrate and ammonium nitrite. The remaining aqueous solution, which has decreased concentration of dissolved ammonium nitrite and ammonium nitrate (< 5 wt%) can be fed back to the air scrubber through stream **(Z).**

## Claims

1. An apparatus for production of an ammonium nitrate and/or ammonium nitrite solution or solid from an ammonium comprising gas, characterized that

   - the apparatus comprises i) a NOx source or NOx generator (G) fluidly connected with ii) a first fluid recirculation unit fluidly (for producing nitric acid and/or nitrous acid)which is connected with iii) a second fluid recirculation unit (to capture ammonia from an ammonia comprising gas into an aqueous stream comprising nitric acid and/or nitrous acid to produce ammonium nitrate and/or ammonium nitrite)
   - whereby the first fluid recirculation unit comprising 1) gas-liquid contactor (I), 2) a gas stream inlet guidance from the NOx source or NOx generator (G) at the gas-liquid contactor (I), 3) a buffer unit (M) (for maintaining the aqueous stream of the first fluid recirculation unit at a pH of 1 to 6), 4) a liquid pump (O) between the buffer unit (M) and the gas-liquid contactor (I) and 5) a liquid stream inlet from the second fluid recirculation unit
   - whereby the second fluid recirculation unit comprising 1) a gas-liquid contactor (T), 2) a gas stream inlet at the gas-liquid contactor (T), 3) a buffer unit (W) (for maintaining the aqueous stream of the first fluid recirculation unit slightly acidic pH of 4 to 6.9), 4) an atmospheric pressure or near atmospheric pressure (overpressure < 1 bar) pump between the buffer unit (W) and the gas-liquid contactor (T).

2. An apparatus according to statement 1, whereby 1) the NOx source or NOx generator (G) has a fluid outlet into a fluid inlet of a first fluid recirculation, 2) the first recirculation unit has a fluid outlet into a fluid inlet of a second recirculation unit and 3) the second recirculation unit has a fluid outlet back into a fluid inlet of the first fluid recirculation.

3. An apparatus according to any one of the statements 1 to 2, whereby the gas-liquid contactor (I) of the first fluid recirculation unit is an absorption column.

4. An apparatus according to any one statements 1 to 3, whereby the gas-liquid contactor (T) of the second fluid recirculation unit is an air scrubber

5. An apparatus according to any one of the statements 1 to 4, whereby the pressure and flowrate of the gas inlet and outlet of the gas-liquid contactor (I) of the first recirculation unit is adapted to maintain the increased pressure of 1-10 bar.

6. An apparatus according to any one of the statements 1 to 5, whereby the pressure and flowrate of the gas inlet and outlet of the and the gas-liquid contactor (I) of the first recirculation unit is adapted to maintain the increased pressure of pressure of 3-7 bar.

7. An apparatus according to any one statements 1 to 7, for continuous production of an ammonium nitrate and/or ammonium nitrite solution or solid from an ammonium comprising gas.

8. An apparatus according to any one statements 1 to 7, for the production of ammonium nitrate and/or ammonium nitrite end product is in an aqueous solution.

9. An apparatus according to any one statements 1 to 7, for the production of ammonium nitrate and/or ammonium nitrite end product is a solid.

10. An apparatus according to any one statements 1 to 10, whereby the NOx source is a NOx generator (G) comprising a NOx source or generator (G) and passing the product of the NOx source or generator (G) into the gas-liquid contactor (I) of the first recirculation unit

11. An apparatus according to any one statements 1 to 10, whereby the NOx source is a NOx generator (G) comprising the NOx source or generator (G) operating under an overpressure of 1-10 bar.

12. An apparatus according to any one statements 1 to 10, whereby the NOx source is a NOx generator (G) comprising the NOx source or generator (G) fed with a mixture of one or more $N_2$ and/or $O_2$ comprising gas streams with a combined $O_2/N_2$ ratio of 2-3, and $N_2$ and $O_2$ comprising recirculated gas coming from the gas outlet of the fluid recirculation unit (iii) with an $O_2/N_2$ ratio of 0.4-2.5. The mixture fed to the NOx source or generator (G) also has an $O_2/N_2$ ratio of 0.4-2.5.

**13.** An apparatus according to any one statements 1 to 10, whereby the NOx source is a NOx generator (G) comprising the NOx source or generator (G) fed with a mixture of one or more $N_2$ and/or $O_2$ comprising gas streams with a combined $O_2/N_2$ ratio of 2.3-2.7, and $N_2$ and $O_2$ comprising recirculated gas coming from the gas outlet of the fluid recirculation unit (iii) with an $O_2/N_2$ ratio of 0.4-2.5. The mixture fed to the NOx source or generator (G) also has an $O_2/N_2$ ratio of 0.4-2.5.

**14.** An apparatus according to any one statements 1 to 10, whereby the NOx source is a NOx generator (G) comprising the NOx source or generator (G) fed with a mixture of one or more $N_2$ and/or $O_2$ comprising gas streams with a combined $O_2/N_2$ ratio of 2.3-2.7, and $N_2$ and $O_2$ comprising recirculated gas coming from the gas outlet of the fluid recirculation unit (iii) with an $O_2/N_2$ ratio of 0.4-2.5. The mixture fed to the NOx source or generator (G) also has an $O_2/N_2$ ratio of 0.4-2.5 and under pressure of 1-10 bar that passed through the NOx source or generator (G).

**15.** An apparatus according to any one statements 1 to 10, whereby the NOx source is a NOx generator (G) comprising the NOx source or generator (G) fed with a mixture of one or more $N_2$ and/or $O_2$ comprising gas streams with a combined $O_2/N_2$ ratio of 2.3-2.7, and $N_2$ and $O_2$ comprising recirculated gas coming from the gas outlet of the fluid recirculation unit (iii) with an $O_2/N_2$ ratio of 0.4-2.5. The mixture fed to the NOx source or generator (G) also has an $O_2/N_2$ ratio of 0.4-2.5 and under pressure of 3-8 bar that passed through the NOx source or generator (G)

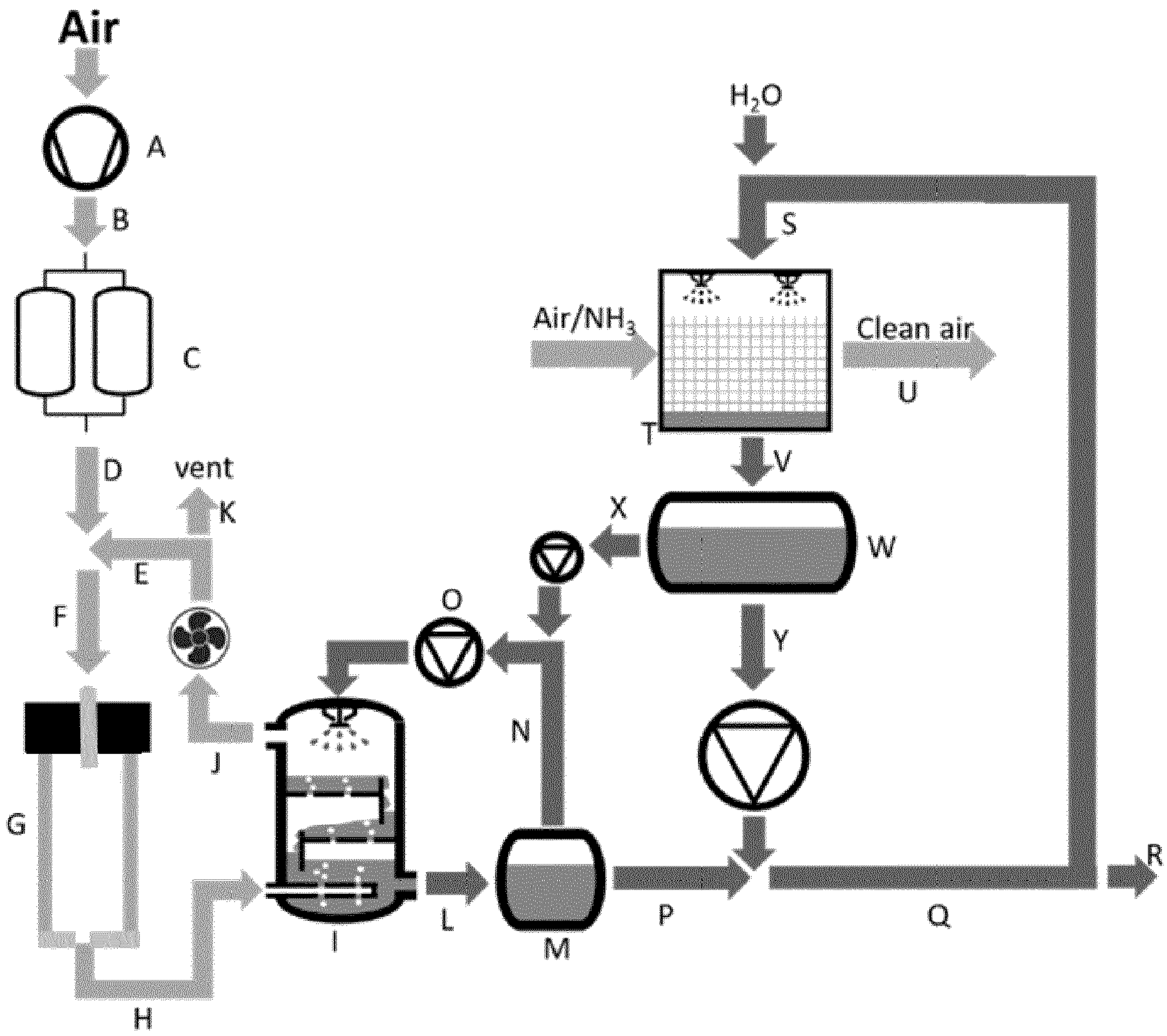


Fig. 1

Europäisches Patentamt
European Patent Office
Office européen des brevets

# EUROPEAN SEARCH REPORT

Application Number
EP 22 18 3108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/203360 A1 (JOHNSTON ANTHONY MATTHEW [AU] ET AL) 23 July 2015 (2015-07-23) * paragraphs [0113] - [0123]; figure 5 * ----- | 1-15 | INV. C01C1/18 B01D53/18 B01J19/24 C01B21/28 C01B21/40 |
| A | WO 2021/226275 A1 (ENVIRO WATER MINERALS COMPANY INC [US]) 11 November 2021 (2021-11-11) * paragraph [0083]; figure 6 * ----- | 1-15 | |
| A | US 4 174 379 A (BALDINI REGINALD A [US] ET AL) 13 November 1979 (1979-11-13) * column 3, lines 16-55; figure 1 * ----- | 1-15 | |

TECHNICAL FIELDS SEARCHED (IPC)

C01C
C01B
B01D
B01J

The present search report has been drawn up for all claims

1

| Place of search | Date of completion of the search | Examiner |
|---|---|---|
| Munich | 1 December 2022 | Werner, Håkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 18 3108

This annex lists the patent family members relating to the patent documents cited in the above-mentioned European search report. The members are as contained in the European Patent Office EDP file on
The European Patent Office is in no way liable for these particulars which are merely given for the purpose of information.

01-12-2022

| Patent document cited in search report | Publication date | Patent family member(s) | Publication date |
|---|---|---|---|
| US 2015203360 A1 | 23-07-2015 | AR 084074 A1 | 17-04-2013 |
| | | AU 2011335886 A1 | 26-07-2012 |
| | | BR 112013013631 A2 | 01-11-2016 |
| | | CA 2819562 A1 | 07-06-2012 |
| | | CN 103328386 A | 25-09-2013 |
| | | EP 2646368 A1 | 09-10-2013 |
| | | RU 2013128461 A | 10-01-2015 |
| | | US 2013287670 A1 | 31-10-2013 |
| | | US 2015203360 A1 | 23-07-2015 |
| | | WO 2012071616 A1 | 07-06-2012 |
| | | ZA 201304489 B | 29-01-2014 |
| WO 2021226275 A1 | 11-11-2021 | NONE | |
| US 4174379 A | 13-11-1979 | CA 1107936 A | 01-09-1981 |
| | | US 4174379 A | 13-11-1979 |

EPO FORM P0459

For more details about this annex : see Official Journal of the European Patent Office, No. 12/82